# EUROPÄISCHE PATENTSCHRIFT

(11) **EP 3 680 814 B1**
(45) Veröffentlichungstag und Bekanntmachung des Hinweises auf die Patenterteilung: **09.10.2024**
(21) Anmeldenummer: 19151695.4
(22) Anmeldetag: 14.01.2019
(51) Int. Cl.: G06V 20/52, G06V 40/20, G08B 13/183

(54) **VERFAHREN ZUR ERKENNUNG VON BEWEGUNGSABLÄUFEN UND PASSIERERKENNUNGSSYSTEM**
METHOD FOR DETECTING MOVEMENTS AND PASSENGER DETECTION SYSTEM
PROCÉDÉ DE DÉTECTION DES DÉROULEMENTS DE MOUVEMENTS ET SYSTÈME DE DÉTECTION CORRESPONDANT

(43) Veröffentlichungstag der Anmeldung: 15.07.2020
(73) Patentinhaber: dormakaba Deutschland GmbH, 58256 Ennepetal (DE)
(72) Erfinder: Vollmer, Arno, 77815 Bühl (DE)
(74) Vertreter: Balder IP Law, S.L.

(56) Entgegenhaltungen:
- EP-A1- 1 921 581
- EP-A2- 0 828 233
- WO-A1-00/33261
- CN-U- 208 309 444
- DE-A1- 19 523 676
- US-A- 5 519 784
- US-A1- 2009 167 857
- US-A1- 2010 308 959
- US-A1- 2014 163 703
- US-A1- 2014 241 581

## Beschreibung

Die vorliegende Erfindung betrifft ein Verfahren zur berührungslosen Erkennung von wenigstens einem Bewegungsablauf und ein Passiererkennungssystem.

Im Stand der Technik sind Verfahren bekannt, die Bewegungsabläufe, insbesondere das Passieren von Personen, durch Erfassungsbereiche hindurch bzw. in diese hinein und/oder aus diesen hinaus mit Erfassungseinheiten erkennen. An Eingängen und Ausgängen von Gebäuden oder Bereichen, insbesondere zugangsbeschränkten Bereichen, werden beispielsweise Drehkreuze, Personenschleusen oder Schranken zur gezielten Einlass- bzw. Auslasskontrolle genutzt. Nachteilig ist bei den bekannten Lösungen für die Einlass- bzw. Auslasskontrolle, dass diese zumeist zeitbasiert öffnen oder lediglich einen motorischen Ablauf zum Ein- bzw. Auslass ausführen. Diese Lösungen sind anfällig für die missbräuchliche Ausnutzung der nicht vorhandenen oder nicht exakten Kontrolle der ein- bzw. ausgelassenen Personen, insbesondere der Anzahl der Personen, sodass beispielsweise zwei Personen, Fahrzeuge oder andere bewegliche Objekte während einer Öffnungsphase passieren können.

Aus der US 5 519 784 ist eine Vorrichtung zur Klassifizierung der Bewegung von Gegenständen entlang eines Weges bekannt. Eine Reihe von parallelen, linearen Strahlen wird in aufeinanderfolgenden Bereichen über einen Durchgang projiziert. Detektoren erkennen, wenn die Strahlen von einer oder mehreren Personen unterbrochen werden, die sich in dem Durchgang in eine von zwei entgegengesetzten Richtungen bewegen. Die Strahlen werden zu verschiedenen Zeiten in einer Reihenfolge unterbrochen, die der Anzahl und der Bewegungsrichtung der Personen entspricht.

Die sequentiell erzeugten unterbrochenen Strahlsignale werden als historische Objektbewegungsinformationen im Speicher gespeichert und später verarbeitet, um zusammengesetzte Strahlunterbrechungsmuster zu erzeugen, die die Anzahl der Personen und die Bewegungsrichtung anzeigen, wobei die Muster eine Funktion des Zeitbereichs und des Sensorindexes, d. h. der Sensoridentität und der Position im Durchgang sind. Die so erzeugten Muster werden mit Referenzmustern verglichen, wobei eine computergestützte Mustererkennungsanalyse, z. B. mit einem künstlichen neuronalen Netz, eingesetzt wird. Der Vergleich klassifiziert die Personen in der Passage nach Bewegungsrichtung und Anzahl.

Aus der US 2009/0167857 A1 ist ein Individualdetektor bekannt, der aus einem Entfernungsbildsensor und einer Objekterfassungsstufe besteht. Der Entfernungsbildsensor ist so angeordnet, dass er einen Erfassungsbereich anvisiert und ein Entfernungsbild erzeugt. Wenn ein oder mehrere physische Objekte in diesem Bereich vorhanden sind, enthält jedes Bildelement des Entfernungsbildes jeden Entfernungswert bis zu dem einen bzw. den mehreren physischen Objekten. Auf der Grundlage des mit dem Sensor erzeugten Entfernungsbildes erkennt die Objekterfassungsstufe die ein oder mehreren physischen Objekte in dem Bereich separat. Dementsprechend ist es möglich, ein oder mehrere physische Objekte in dem Erfassungsbereich separat zu erfassen, ohne die Anzahl der konstituierenden Elemente zur Erfassung des einen oder der mehreren physischen Objekte zu erhöhen.

Aufgabe der vorliegenden Erfindung ist es, der voranstehend beschriebenen Problematik zumindest teilweise Rechnung zu tragen. Insbesondere ist es Aufgabe der vorliegenden Erfindung, ein Verfahren zur berührungslosen Erkennung von wenigstens einem Bewegungsablauf bereitzustellen, welches mit hoher Genauigkeit und auch bei geringem Abstand zwischen zwei aufeinander folgenden Personen, Fahrzeugen oder anderen beweglichen Objekten eine Erkennung der Bewegungsabläufe ermöglicht. Ferner offenbart die Erfindung ein Passiererkennungssystem.

Die voranstehende Aufgabe wird durch die Patentansprüche gelöst. Insbesondere wird die voranstehende Aufgabe durch das Verfahren gemäß Anspruch 1 sowie das Passiererkennungssystem gemäß Anspruch 13 gelöst. Weitere Vorteile der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Passiererkennungssystem und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird ein Verfahren zur berührungslosen Erkennung von wenigstens einem Bewegungsablauf mit einem Passiererkennungssystem zur Verfügung gestellt. Das Passiererkennungssystem weist wenigstens eine Sensoreinheit zum Erfassen jeweils wenigstens eines Bewegungszustandes innerhalb eines Erfassungsbereichs der Sensoreinheit, eine Sendeeinheit zur Übermittlung des wenigstens einen erfassten Bewegungszustandes und eine Rechnereinheit mit einer Empfangseinheit zum Empfang des wenigstens einen erfassten Bewegungszustandes auf. Die Rechnereinheit umfasst weiter eine Auswerteinheit zur Auswertung des wenigstens einen erfassten Bewegungszustandes sowie eine Bereitstellungseinheit zur Bereitstellung des wenigstens einen ausgewerteten Bewegungszustandes und/oder des wenigstens einen erkannten Bewegungsablaufs. Die Sensoreinheit umfasst eine Vielzahl von Sensoren, wenigstens zwei, besonders vorteilhaft vier Sensoren, welche in der Sensoreinheit übereinander und/oder diagonal zueinander angeordnet sind, wobei die Sensoreinheit als Lichtschranke, Einweg-Lichtschranke, Reflexions-Lichtschranke und/oder Lichtgitter ausgestaltet ist.

Das Verfahren ist durch nachfolgende Schritte gekennzeichnet:
- Erfassung von wenigstens einem ersten Bewegungszustand und wenigstens einem zweiten Bewegungszustand innerhalb des Erfassungsbereichs durch die wenigstens eine Sensoreinheit, wobei ein erster Bewegungszustand und ein zweiter Bewegungszustand zu unterschiedlichen Zeitpunkten erfasst werden,
- Übermittlung der wenigstens zwei erfassten Bewegungszustände durch die Sendeeinheit an die Empfangseinheit der Rechnereinheit,
- Empfang der wenigstens zwei erfassten Bewegungszustände durch die Empfangseinheit der Rechnereinheit,
- Erkennung wenigstens eines Bewegungsablaufs auf Grundlage der wenigstens zwei empfangenen Bewegungszustände durch die Auswerteinheit der Rechnereinheit,
- Bereitstellung der wenigstens zwei ausgewerteten Bewegungszustände und/oder des wenigstens einen erkannten Bewegungsablaufs durch eine Bereitstellungseinheit der Rechnereinheit.
- Ermittlung einer vorderen Profillinie einer Person und/oder eines Objekts innerhalb des Erfassungsbereichs auf Grundlage des wenigstens einen empfangenen Bewegungszustandes durch die Rechnereinheit.

Erfindungsgemäß sieht das Verfahren eine Erkennung einer Profillinie, insbesondere der vorderen Eintrittslinie eines Profils, einer Person bzw. eines Objekts vor. Eine Person hat bei dem Durchschreiten des Erfassungsbereichs der wenigstens einen Sensoreinheit eine spezifische Profillinie bzw. Vorderkante des Profils, die sich von der Profillinie bzw. Vorderkante des Profils eines Objekts unterscheidet. Insbesondere ist das Eintreten zuerst mit einem Bein und/oder Fuß in den Erfassungsbereich der wenigstens einen Sensoreinheit kennzeichnend für die Vorderkante des Profils einer Person. Somit ist vorteilhaft ermöglicht, dass eine Tasche einer Person nicht als nachfolgende Person in dem erfindungsgemäßen Verfahren erkannt wird.

Ein derart ausgestaltetes erfindungsgemäßes Verfahren ermöglicht vorteilhaft mit hoher Genauigkeit und auch bei geringem Abstand zwischen zwei aufeinander folgenden Personen, Fahrzeugen oder anderen beweglichen Objekten eine Erkennung des wenigstens einen Bewegungsablaufs. Ein Bewegungsablauf ist dabei ein Durchschreiten und/oder Passieren des Erfassungsbereichs der Sensoreinheit. Ein Bewegungszustand ist im Rahmen der Erfindung als eine Momentaufnahme des erfassten Bereichs durch die wenigstens eine Sensoreinheit zu verstehen. Ein Bewegungszustand gibt somit anschaulich ausgedrückt an, welche Sensoreinheit an welcher Position eine Bewegung, beispielsweise in Form eines neu erkannten Objekts und/oder einer Person in dem Erfassungsbereich, erkennt. Besonders vorteilhaft ist das erfindungsgemäße Verfahren durch die Erfassung von wenigstens zwei Bewegungszuständen, welche zueinander in Relation gesetzt werden können und damit weitere Schlüsse bei der Erkennung der Bewegungsabläufe durch die Auswerteinheit des Verfahrens geschlossen werden können. Ein Bewegungsablauf wird insbesondere aus dem zeitlichen Vergleich von Bewegungszuständen erkannt. Die Sensoreinheiten können wenigstens einen Sensor oder eine Vielzahl von Sensoren umfassen. Sensoren können in der Sensoreinheit nebeneinander, übereinander und/oder diagonale zueinander angeordnet sein. Die Sensoreinheiten selbst können ebenfalls eine vertikale, horizontale oder diagonale Anordnung in dem eingebauten Zustand aufweisen. Sensoren werden in aktive Sensoren und passive Sensoren unterschieden. Ein aktiver Sensor erfasst aktuell eine Person oder ein Objekt. Ein passiver Sensor erfasst aktuell keine Person und kein Objekt in seinem Erfassungsbereich. Eine Sensoreinheit kann wenigstens eine Quelle und wenigstens einen Empfänger aufweisen und/oder mittels Reflexion erfassen. Die wenigstens eine Sensoreinheit ist als Lichtschranke, Einweg-Lichtschranke, Reflexions-Lichtschranke und/oder Lichtgitter ausgestaltet. Eine Unterscheidung zwischen einer Person und einem von einer Person getragenen Objekt, wie einer Tasche, kann durch das erfindungsgemäße Verfahren durch eine Auswertung der erfassten Bewegungszustände erfolgen. Das erfindungsgemäße Verfahren kann insbesondere computerimplementiert ausgeführt werden.

Gemäß einer Weiterbildung der vorliegenden Erfindung ist es möglich, dass die Erkennung des wenigstens einen Bewegungsablaufs durch die Rechnereinheit eine Erkennung einer Richtung des wenigstens einen Bewegungsablaufs umfasst. Alternativ oder zusätzlich ist ein Bewegungsablauf, ein Eintritt und ein Austritt in den Erfassungsbereich der Sensoreinheit aus der gleichen Richtung und in die gleiche Richtung oder in unterschiedliche Richtungen, folglich ein Bewegungsablauf mit einer Wendung oder ein besagtes Passieren. Anschaulich formuliert weist der Erfassungsbereich des wenigstens einen Sensors bei einseitigem Durchschreiten eine Eintrittsseite und eine Austrittsseite auf. Selbstverständlich können die Seiten in ihrer Funktion getauscht werden und der Erfassungsbereich folglich von der anderen Seite durchschritten werden oder von beiden Seiten jeweils als Eintrittsseite und Austrittsseite genutzt werden. Eine Richtung wird insbesondere durch die zeitliche Abfolge der Erfassung, beispielsweise einer Person, erkannt. Eine Richtung des wenigstens einen Bewegungsablaufs wird dabei von wenigstens zwei Bewegungszuständen durch die wenigstens eine Sensoreinheit und/oder durch jeweils einen Bewegungszustand durch wenigstens zwei Sensoreinheiten erfasst. Eine Erkennung der Richtung des Bewegungsablaufs erfolgt dabei aus dem zeitlichen Ablauf in Kombination mit der örtlichen Anordnung der aktiven und passiven Sensoren der wenigstens einen Sensoreinheit. Anschaulich formuliert wird eine Richtung eines Bewegungsablaufs von rechts nach links erkannt, wenn ein rechts angeordneter Sensor zuerst aktiv und ein links angeordneter Sensor als letztes wieder passiv wird. Das Verfahren kann sich nur einer Bauart und/oder Erfassungsmethode von Sensoreinheiten für die erfindungsgemäßen Verfahrensschritte zur Erfassung bedienen oder mehrere, verschiedene Sensoreinheiten umfassen. Insbesondere können für die Erfassung des wenigstens einen Bewegungszustands und die Erfassung der Richtung des wenigstens einen Bewegungsablaufs unterschiedliche Sensoreinheiten genutzt werden.

Bei einer vorteilhaften Ausgestaltungsvariante des erfindungsgemäßen Verfahrens ist es möglich, dass die Erkennung des wenigstens einen Bewegungsablaufs durch die Rechnereinheit eine Erkennung einer Anzahl des wenigstens einen erkannten Bewegungsablaufs, insbesondere eine Anzahl von zugehörigen Personen des wenigstens einen Bewegungsablaufs, umfasst. Ein erfindungsgemäßes Verfahren kann somit vorteilhaft die Anzahl von beispielsweise den Erfassungsbereich passierten Personen und/oder Objekten erkennen. In Kombination mit einer Zugangskontrolle wird mit dem erfindungsgemäßen Verfahren eine Erkennung von Nachfolgen einer unberechtigten Person ermöglicht. Eine Anzahl des wenigstens einen Bewegungsablaufs wird dabei erneut insbesondere von wenigstens zwei Bewegungszuständen durch die wenigstens eine Sensoreinheit und/oder durch jeweils einen Bewegungszustand durch wenigstens zwei Sensoreinheiten erfasst.

Bei einer ebenfalls vorteilhaften Ausgestaltungsvariante des erfindungsgemäßen Verfahrens ist es möglich, dass die Erkennung der Anzahl des wenigstens einen Bewegungsablaufs auf Grundlage eines Trennungskriteriums erfolgt. Ein Trennungskriterium stellt, insbesondere bei der Erkennung wenigstens eines Bewegungsablaufs auf Grundlage der wenigstens zwei empfangenen Bewegungszustände durch die Auswerteinheit, ein Kriterium dar, anhand dessen zwei Bewegungsabläufe, beispielsweise von zwei Personen, einer Person und einem Objekt oder zwei Objekten, unterschieden werden können. Bei einer graphischen Darstellung des zeitlichen Verlaufs der erfassten Bewegungszustände ergeben sich die erkannten Bewegungsabläufe. Ein anschauliches Trennungskriterium kann im Rahmen der Erfindung eine Reihe an passiven Sensoren zwischen aktiven Sensoren sein. Diese repräsentieren einen erfassten Abstand zwischen beispielsweise zwei Personen, welche durch das erfindungsgemä-ße Verfahren erkannt wird. Ein Trennungskriterium kann im Umkehrschluss ebenfalls Ausnahmen oder Sonderkriterien umfassen, welche eben nicht als Trennungskriterium gelten sollen. Beispielsweise bei einer besonders großen Person mit einem hohen Schritt sollen von dem erfindungsgemäßen Verfahren die beiden Beine natürlich nicht als zwei Personen erfasst werden.

Bei einer ebenfalls vorteilhaften Ausgestaltungsvariante des erfindungsgemäßen Verfahrens ist es möglich, dass das Trennungskriterium wenigstens einen erfassten passiven Bewegungszustand zeitlich nach oder vor einem erfassten aktiven Bewegungszustand aufweist. Analog zu dem vorherigen Abschnitt erkennt die Auswerteinheit eine Lücke zwischen zwei Personen beispielsweise anhand einem passiven Sensor neben einem aktiven Sensor und/oder zwischen zwei aktiven Sensoren. In Kombination mit den weiteren Erkennungsanalysen der Erfindung können die zwei den Abstand bildenden Objekte bzw. Personen als Objekte und/oder Personen eingestuft werden. Somit ermöglicht ein erfindungsgemäßes Verfahren die sichere Erkennung von einer Anzahl an Personen und Objekten bei dem Durchschreiten eines Passiererkennungssystems.

Bei einer ebenfalls vorteilhaften Ausgestaltungsvariante des erfindungsgemäßen Verfahrens ist es möglich, dass das Trennungskriterium wenigstens einen erfassten passiven Bewegungszustand örtlich oberhalb oder unterhalb von einem erfassten aktiven Bewegungszustand aufweist. Neben einer zeitlichen Abfolge an Bewegungszuständen kann gemäß dieser Weiterbildung des erfindungsgemäßen Verfahrens ebenfalls die örtliche, insbesondere die Höhe der aktiven und passiven Sensoren der wenigstens einen Sensoreinheit berücksichtigt werden. Beispielsweise kann mit einem derart weiterentwickelten Verfahren ein Loch als Bereich aus passiven Sensoren erkannt werden, welches von aktiven Sensoren umgeben ist. So kann durch das Verfahren auch bei sehr dicht aufeinander folgenden Personen, welche keine vollständige Lücke zwischen sich bilden eine sichere Erkennung gewährleistet werden.

Bei einer ebenfalls vorteilhaften Ausgestaltungsvariante des erfindungsgemäßen Verfahrens ist es möglich, dass das Verfahren, insbesondere die Bereitstellung der wenigstens zwei ausgewerteten Bewegungszustände und/oder des wenigstens einen Bewegungsablaufs durch eine Bereitstellungseinheit der Rechnereinheit, eine optische, akustische und/oder motorische Ausgabe durch eine Ausgabeeinheit umfasst. Eine Ausgabe ist im Rahmen des Verfahrens ein optischer und/oder akustischer Alarm. Alternativ oder zusätzlich kann die Ausgabe der Ausgabeeinheit ein Öffnen oder Schließen von Türflügeln sein. Ebenfalls möglich ist, dass die Ausgabe eine visuelle Ausgabe auf beispielsweise einem Display ist, welches Statistiken über die erfassten Bewegungsabläufe ausgeben kann. Somit ermöglicht das erfindungsgemäße Verfahren eine vorteilhafte Ausgabe beispielsweise zur Benachrichtigung von Sicherheitspersonal bei dem Erkennen von dem Passieren von zwei direkt aufeinander folgenden Personen durch den Erfassungsbereich der wenigstens einen Sensoreinheit.

Bei einer weiteren vorteilhaften Ausgestaltungsvariante des erfindungsgemäßen Verfahrens ist es möglich, dass die Erfassung der wenigstens zwei Bewegungszustände innerhalb eines jeweils zweidimensionalen oder jeweils im Wesentlichen zweidimensionalen Erfassungsbereichs durch die wenigstens eine Sensoreinheit erfolgt. Ein im Wesentlichen zweidimensionaler Erfassungsbereich ist im Rahmen der Erfindung ein Erfassungsbereich mit einer vielfach, wenigstens dreimal größeren Erstreckung in zwei Ausbreitungsrichtungen im Vergleich zu der dritten Ausbreitungsrichtung. Anschaulich kann ein im Wesentlichen zweidimensionaler Erfassungsbereich eine Erfassungsebene darstellen, welche im Rahmen der technischen Möglichkeiten der Erfindung eine geringe Dicke aufweist. Eine Sensoreinheit ist insbesondere als eine Lichtschranke ausgestaltet und weist folglich einen von der Lichtschranke ausgehenden strahlförmigen und/oder kegelförmigen, bzw. bei einer Vielzahl von nebeneinander angeordneten Sensoren, einen keilförmigen, ebenen oder flächigen Erfassungsbereich auf. Die Sensoreinheit kann horizontal oder vertikal angeordnet sein. Ein Verfahen mit einer derart ausgestalteten Sensoreinheit ermöglicht eine vorteilhafte und bessere Trennung bei der Erfassung von nachfolgenden Personen und/oder Objekten.

Zudem ist es bei einem Verfahren der vorliegenden Erfindung möglich, dass die Übermittlung, der Empfang und/oder die Auswertung der wenigstens zwei erfassten Bewegungszustände nur bei Erfassung einer Veränderung von wenigstens einem ersten Bewegungszustand im Vergleich zu wenigstens einem zweiten Bewegungszustand ausgeführt werden. Ein derart ausgestaltetes Verfahren ist besonders energie- und ressourcensparend und führt beispielsweise nachfolgende Kommunikations- und/oder Auswertschritte des Verfahrens nur bei erkannter Notwendigkeit durch veränderte Eingangsdaten in Form von einer erfassten Veränderung von wenigstens einem ersten Bewegungszustand im Vergleich zu wenigstens einem zweiten Bewegungszustand, welcher zeitlich früher oder später erfasst worden ist.

Von weiterem Vorteil kann es sein, wenn das erfindungsgemäße Verfahren weiter umfasst:
- Umwandlung der Daten der wenigstens zwei erfassten Bewegungszustände (2) durch eine Umwandlungseinheit (38) der Rechnereinheit (30).

Eine Umwandlung der Daten kann erfindungsgemäß in eine verfahrensintern genormte Datendarstellung oder eine Anpassung an branchenübliche Standards sein. Eine Umwandlung der Daten gestaltet eine weitere Nutzung und Verarbeitung der erfassten Daten durch weitere Vorrichtungen unkompliziert und ermöglicht somit eine vorteilhafte Reduzierung des Aufwands für die Integration von beispielsweise weiteren Auswertmethoden auf Grundlage der erfassten Daten des erfindungsgemäßen Verfahrens. Insbesondere kann die Umwandlung die erfassten Bewegungszustände jeweils in einer Variablen des Datentyps Integer mit 64 Bits oder mehr umwandeln. Die Anzahl der Bits wurde beispielhaft gewählt, um weitere Sensorkonfigurationen mit 64 oder mehr Sensoren realisieren zu können.

Zudem ist es bei einem Verfahren der vorliegenden Erfindung möglich, dass die Umwandlung der Daten eine Addition von aktiven Sensoren der wenigstens einen Sensoreinheit umfasst. Eine Addition von aktiven Sensoren der wenigstens einen Sensoreinheit ermöglicht eine Reduzierung der zu übertragenden Daten. Beispielsweise kann anstatt einem Aktiv-/Passiv-Status für jeden Sensor einer Sensoreinheit ein einzelner Status mit der Anzahl der aktiven bzw. passiven Sensoren einer Sensoreinheit übertragen und verarbeitet werden.

Zudem ist es bei einem Verfahren der vorliegenden Erfindung vorteilhaft, dass die Umwandlung der Daten wenigstens einen erfassten Bewegungszustand für die Grundlage zur Erkennung des wenigstens einen Bewegungsablaufs löscht. Das erfindungsgemäße Verfahren kann erkannte Bewegungszustände als nicht relevant für die Erkennung von Bewegungsabläufen einstufen und folglich für die Grundlage zur Erkennung von Bewegungsabläufen löschen. Ein Löschen von derartigen Bewegungsabläufen kann ebenfalls eine schlichte Nicht-Weiterverarbeitung oder gesondertes Markieren der betreffenden Bewegungszustände sein. Als nicht relevanter Bewegungszustand kann beispielsweise ein einzelner aktiver Sensor, welcher ausschließlich oder weitestgehende von passiven Sensoren umgeben ist, eingestuft werden. Ebenfalls als nicht relevant können eine anschaulich formulierte dünne Linie von aktiven Sensoren eingestuft werden. Grundsätzlich können gemäß einer Weiterbildung des Verfahrens Bewegungszustände, die nicht durch eine Person ausgelöst werden können, als nicht relevant für die Erkennung von Bewegungsabläufen von Personen eingestuft werden. Als Basis für eine derartige Einstufung können beispielsweise übliche geometrische Abmaße einer Person herangezogen werden.

Gemäß einem zweiten Aspekt der vorliegenden Erfindung wird ein Passiererkennungssystem zur Ausführung des Verfahrens nach dem ersten Aspekt zur Verfügung gestellt. Das Passiererkennungssystem umfasst wenigstens eine erste Sensoreinheit zum Erfassen jeweils wenigstens eines Bewegungszustandes innerhalb eines Erfassungsbereichs der wenigstens einen Sensoreinheit, eine Sendeeinheit zur Übermittlung des wenigstens einen erfassten Bewegungszustandes, eine Rechnereinheit mit einer Empfangseinheit zum Empfang des wenigstens einen erfassten Bewegungszustandes, mit einer Auswerteinheit zur Auswertung des wenigstens einen erfassten Bewegungszustandes sowie mit einer Bereitstellungseinheit zur Bereitstellung des wenigstens einen ausgewerteten Bewegungszustandes und/oder des wenigstens einen erkannten

Bewegungsablaufs. Die Sensoreinheit umfasst eine Vielzahl von Sensoren, wenigstens zwei, besonders vorteilhaft vier Sensoren, welche in der Sensoreinheit übereinander und/oder diagonal zueinander angeordnet sind, wobei die Sensoreinheit als Lichtschranke, Einweg-Lichtschranke, Reflexions-Lichtschranke und/oder Lichtgitter ausgestaltet ist.

Das Passiererkennungssystem ist zum Erkennen von wenigstens einem Bewegungsablauf, insbesondere von Bewegungsabläufen von Personen, besonders vorteilhaft in Form einer Personenschleuse, ausgestaltet. Die Sensoreinheit des Passiererkennungssystems kann wenigstens eine Quelle und wenigstens einen Empfänger aufweisen und/oder mittels Reflexion erfassen. Die wenigstens eine Sensoreinheit umfasst eine Vielzahl von Sensoren, wenigstens zwei, besonders vorteilhaft vier Sensoren, und ist als Lichtschranke, Einweg-Lichtschranke, Reflexions-Lichtschranke und/oder Lichtgitter ausgestaltet. Eine Anordnung der wenigstens einen Sensoreinheit sieht vorteilhaft eine Erkennung von Personen auf Bein-/Hüfthöhe vor. Die Erfassung des jeweils wenigstens einen Bewegungszustandes erfolgt bevorzugt innerhalb eines jeweils im Wesentlichen zweidimensionalen Erfassungsbereichs durch die wenigstens eine Sensoreinheit. Somit kann durch das Passiererkennungssystem mit möglichst geringen Kosten und Aufwand eine hohe Genauigkeit auch bei geringem Abstand zwischen zwei aufeinander folgenden Personen, Fahrzeugen und/oder anderen beweglichen Objekten für eine Erkennung der Bewegungsabläufe ermöglicht werden. Damit bringt auch ein Passiererkennungssystem die gleichen Vorteile mit sich, wie sie vorstehend ausführlich für ein erfindungsgemäßes Verfahren beschrieben worden sind.

Darüber hinaus kann bevorzugt ein erfindungsgemäßes Passiererkennungssystem dahingehend weiterentwickelt sein, dass wenigstens zwei Sensoreinheiten zum Erfassen von jeweils wenigstens einem Bewegungszustand innerhalb eines jeweiligen Erfassungsbereichs der wenigstens zwei Sensoreinheiten in dem Passiererkennungssystem angeordnet sind. Das Passiererkennungssystem kann sich nur einer Bauart und/oder Erfassungsmethode von Sensoreinheiten für die erfindungsgemäßen Verfahrensschritte zur Erfassung bedienen oder mehrere, verschiedene Sensoreinheiten umfassen. Insbesondere können für die Erfassung des wenigstens einen Bewegungszustands und die Erfassung der Richtung des wenigstens einen Bewegungsablaufs unterschiedliche Sensoreinheiten genutzt werden. Sensoreinheiten können wenigstens einen Sensor oder eine Vielzahl von Sensoren umfassen. Sensoren können in der Sensoreinheit nebeneinander, übereinander und/oder diagonale zueinander angeordnet sein. Die Sensoreinheiten selbst können ebenfalls eine vertikale, horizontale oder diagonale Anordnung in dem eingebauten Zustand aufweisen.

Besonders bevorzugt kann ein erfindungsgemäßes Passiererkennungssystem dahingehend ausgebildet sein, dass eine Ausgabeeinheit des Passiererkennungssystems zur optischen, akustischen und/oder motorischen Ausgabe auf Grundlage der Bereitstellung des wenigstens einen ausgewerteten Bewegungszustandes und/oder des wenigstens einen Bewegungsablaufs durch die Bereitstellungseinheit ausgestaltet ist. Eine Ausgabe ist im Rahmen des Verfahrens ein optischer und/oder akustischer Alarm. Alternativ oder zusätzlich kann die Ausgabe der Ausgabeeinheit ein Öffnen oder Schließen von Türflügeln sein. Ebenfalls möglich ist, dass die Ausgabe eine visuelle Ausgabe auf beispielsweise einem Display ist, welches Statistiken über die erfassten Bewegungsabläufe ausgeben kann.

Ebenfalls bevorzugt kann ein erfindungsgemäßes Passiererkennungssystem dahingehend ausgebildet sein, dass eine Umwandlungseinheit der Rechnereinheit zur Umwandlung der Daten des wenigstens einen erfassten Bewegungszustandes ausgestaltet ist. Eine Umwandlung der Daten kann erfindungsgemäß in eine systemintern genormte Datendarstellung oder eine Anpassung an branchenübliche Standards sein. Eine Umwandlung der Daten gestaltet eine weitere Nutzung und Verarbeitung der erfassten Daten durch weitere Vorrichtungen unkompliziert und ermöglicht somit eine vorteilhafte Reduzierung des Aufwands für die Integration von beispielsweise weiteren Auswertmethoden auf Grundlage der erfassten Daten des erfindungsgemäßen Passiererkennungssystems.

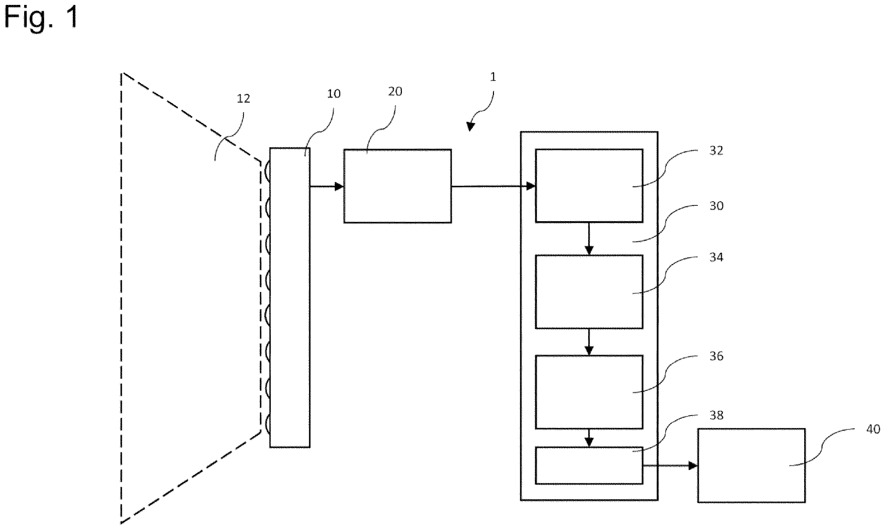

Ein erfindungsgemäßes Verfahren sowie ein erfindungsgemäßes Passiererkennungssystem sowie deren weiterbildenden Vorteile werden nachfolgend anhand von Zeichnungen näher erläutert. Elemente mit gleicher Funktion und Wirkungsweise sind in den Fig. 1 bis 4 jeweils mit denselben Bezugszeichen versehen.

Es zeigen schematisch:
- Fig. 1: ein Flussdiagramm einer Ausführungsform eines erfindungsgemäßen Verfahrens mit einer Sensoreinheit, einer Sendeeinheit, einer Rechnereinheit mit einer Empfangseinheit, einer Auswerteinheit sowie mit einer Bereitstellungseinheit und einer Umwandlungseinheit und einer Ausgabeeinheit,
- Fig. 2: eine Seitenansicht einer Ausführungsform eines erfindungsgemäßen Passiererkennungssystems mit zwei Sensoreinheiten,
- Fig. 3: eine Darstellungsform eines erfindungsgemäßen Bewegungsablaufs auf Grundlage von einer Vielzahl von erfassten Bewegungszuständen, und
- Fig. 4: eine weitere Darstellungsform eines erfindungsgemäßen Bewegungsablaufs auf Grundlage von einer Vielzahl von erfassten Bewegungszuständen mit einer Profillinie.

In Fig. 1 ist ein Flussdiagramm einer Ausführungsform eines erfindungsgemäßen Verfahrens mit einer Sensoreinheit 10 zum Erfassen jeweils wenigstens eines Bewegungszustandes 2 innerhalb eines Erfassungsbereichs 12 der Sensoreinheit 10 gezeigt. Das Verfahren umfasst weiter eine Sendeeinheit 20 zur Übermittlung des wenigstens einen erfassten Bewegungszustandes 2, eine Rechnereinheit 30 mit einer Empfangseinheit 32 zum Empfang des wenigstens einen erfassten Bewegungszustandes 2, mit einer Auswerteinheit 34 zur Auswertung des wenigstens einen erfassten Bewegungszustandes 2 sowie mit einer Bereitstellungseinheit 36 zur Bereitstellung des wenigstens einen ausgewerteten Bewegungszustandes 2 und/oder des wenigstens einen erkannten Bewegungsablaufs 4. Ein derart ausgestaltetes erfindungsgemäßes Verfahren ermöglicht vorteilhaft mit hoher Genauigkeit und auch bei geringem Abstand zwischen zwei aufeinander folgenden Personen, Fahrzeugen oder anderen beweglichen Objekten eine Erkennung des wenigstens einen Bewegungsablaufs 4. Die Sensoreinheit 10 umfasst eine Vielzahl von Sensoren, um einen vertikal größeren Erfassungsbereich 12 zu ermöglichen. Die Sensoreinheit 10 ist dafür vertikal angeordnet.

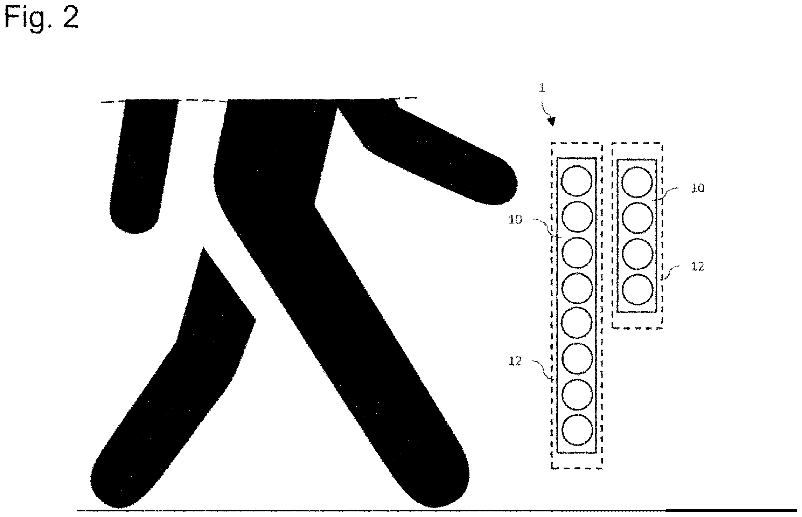

In Fig. 2 ist ein eine Seitenansicht einer Ausführungsform eines erfindungsgemäßen Passiererkennungssystems 1 mit zwei Sensoreinheiten 10 gezeigt. Die linke Sensoreinheit 10 ist dabei insbesondere für die Erfassung der Bewegungszustände 2 zum Erkennen von Bewegungsabläufen 4 (nicht gezeigt) ausgelegt. Die rechte Sensoreinheit 10 dient einer bespielhaften ergänzenden Erfassung von Bewegungszuständen 2, um eine Auswertung der Richtung der erkannten Bewegungsabläufe 4 (nicht gezeigt) durch die Auswerteeinheit 34 der Rechnereinheit 30 zu ermöglichen.

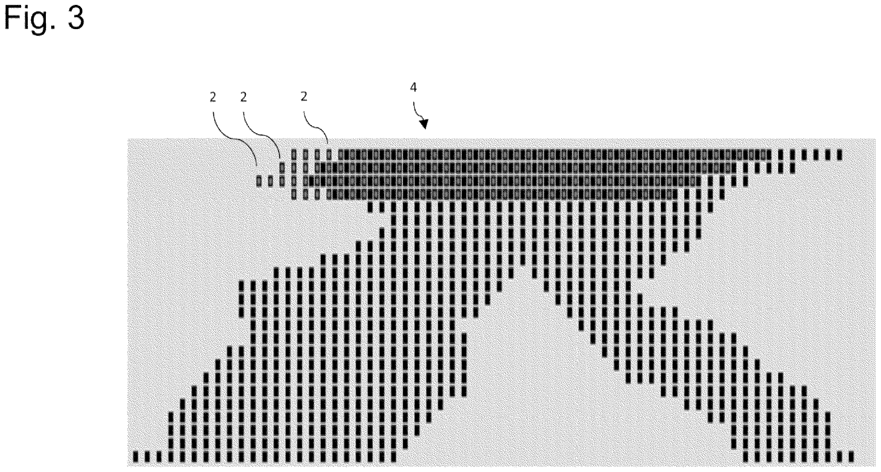

In Fig. 3 ist eine Darstellungsform eines erfindungsgemäßen Bewegungsablaufs 4 auf Grundlage von einer Vielzahl von erfassten Bewegungszuständen 2, beispielsweise eines Passiererkennungssystems 1 gemäß Fig. 2, gezeigt. Ausgefüllte Quadrate stehen für ein erkanntes Objekt durch einen Sensor der Sensoreinheit 10 in dem Erfassungsbereich 12. Die nicht ausgefüllten Quadrate stellen bei der beispielsweisen Verwendung von Lichtschranken ein Einzel-Lichtgitter dar, in welchem der Lichtstrahl nicht durch eine Person und/oder ein Objekt unterbrochen wurde. Der dazu korrespondierende Sensor ist somit passiv. Jede Spalte repräsentiert einen erfassten Bewegungszustand 2. Die Vielzahl an Spalten ergeben sich aus einem zeitlichen Verlauf der erfassten Bewegungszustände 2. Jede Zeile stellt die erfassten Bewegungszustände 2 jeweils wenigstens eines Sensors der Sensoreinheiten 10 dar. Die oberen vier Zeilen zeigen jeweils die erfassten Bewegungszustände 2 der Sensoren von zwei Sensoreinheiten 10. Die ausgefüllten Rechtecke entsprechen den Sensoren der linken Sensoreinheit 10; die unausgefüllten Rechtecken entsprechen den Sensoren der rechten Sensoreinheit 10. Die ältesten erfassten Bewegungszustände 2 sind in Fig.3 rechts dargestellt. Die neuesten erfassten Bewegungszustände 2 sind in Fig.3 links dargestellt. Somit zeigt Fig. 3 exemplarisch einen Eintritt einer Person von links in den Erfassungsbereich 12. Dies ist erkennbar an der Erfassung eines Bewegungszustands 2 zuerst durch die linke Sensoreinheit 10 (siehe Fig.3 rechts, ausgefüllte Rechtecke). Die Person verlässt den Erfassungsbereich 12 nach rechts (siehe Fig.3 oberen vier Zeilen, links, unausgefüllte Rechtecke).

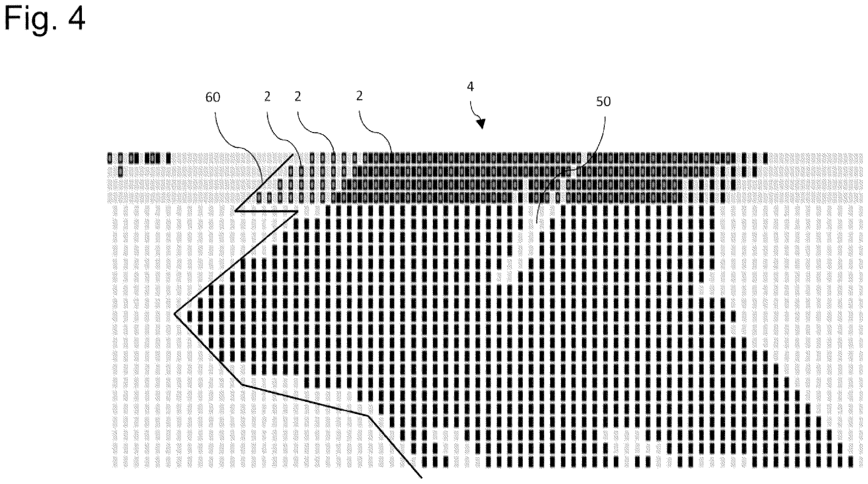

In Fig. 4 ist eine Darstellungsform eines erfindungsgemäßen Bewegungsablaufs 4 auf Grundlage von einer Vielzahl von erfassten Bewegungszuständen 2, beispielsweise eines Passiererkennungssystems 1 gemäß Fig. 2, gezeigt. Somit zeigt Fig. 4 exemplarisch ein Passieren von zwei Personen bzw. in dem Szenario der Zugangskontrolle das Nachfolgen einer unerlaubten zweiten Person von links in und durch den Erfassungsbereich 12. Dies ist erkennbar an der Erfassung eines Bewegungszustands 2 zuerst durch die linke Sensoreinheit 10 (siehe Fig. 3 rechts, ausgefüllte Rechtecke). Die Person verlässt den Erfassungsbereich 12 nach rechts (siehe Fig. 3 oberen vier Zeilen, links, unausgefüllte Rechtecke). Die zwei sehr dicht aufeinander folgenden Personen können durch ein erfindungsgemäßes Verfahren und durch ein erfindungsgemäßes Passiererkennungssystems 1 erkannt werden. Die erfassten Bewegungszustände 2 der wenigstens einen Sensoreinheit 10 werden dazu gemeinsam ausgewertet. Die wenigstens eine Sensoreinheit 10 bzw. die Sensoren sind vorteilhaft in einer Höhe angeordnet, in welcher sich eine Hüfte einer Person befindet. Die Erkennung der Anzahl des wenigstens einen Bewegungsablaufs 4 kann gemäß einer Ausführungsform des erfindungsgemäßen Verfahrens auf Grundlage eines Trennungskriteriums 50 erfolgen. Ein Trennungskriterium 50 stellt, insbesondere bei der Erkennung wenigstens eines Bewegungsablaufs 4 auf Grundlage der wenigstens zwei empfangenen Bewegungszustände 2 durch die Auswerteinheit 34, ein Kriterium dar, anhand dessen zwei Bewegungsabläufe 2 von zwei Personen unterschieden werden können. In Fig. 4 ergibt sich das Trennungskriterium 50 als ein Loch, also einen Bereich aus passiven Sensoren, welches von aktiven Sensoren umgeben ist. So kann durch das Verfahren auch bei sehr dicht aufeinander folgenden Personen, welche keine vollständige Lücke zwischen sich bilden eine sichere Erkennung gewährleistet werden. Auf Grund dieses Trennungskriteriums 50 muss zwingend angenommen werden, dass zwei Personen dicht aufeinander folgen, oder dass ein Gepäckstück vor- oder nachgetragen wird. Diese Unterscheidung kann durch weitere Analyse des erfindungsgemäßen Verfahrens differenziert werden und folglich sicher erkannt werden, ob eine oder mehrere Personen das Passiererkennungssystem 1 durchschritten haben.

Eine Erkennung einer Profillinie 60, insbesondere der vorderen Eintrittslinie eines Profils, einer Person bzw. eines Objekts wird in Fig. 4 ebenfalls gezeigt. Eine Person hat bei dem Durchschreiten des Erfassungsbereichs 12 der wenigstens einen Sensoreinheit 10 eine spezifische Profillinie 60 bzw. Vorderkante des Profils, die sich von der Profillinie 60 bzw. Vorderkante des Profils eines Objekts unterscheidet. Insbesondere ist das Eintreten zuerst mit einem Bein und/oder Fuß in den Erfassungsbereich 12 der wenigstens einen Sensoreinheit 10 kennzeichnend für die Vorderkante des Profils einer Person. Somit ist vorteilhaft ermöglicht, dass eine Tasche einer Person nicht als nachfolgende Person in dem erfindungsgemäßen Verfahren erkannt wird.

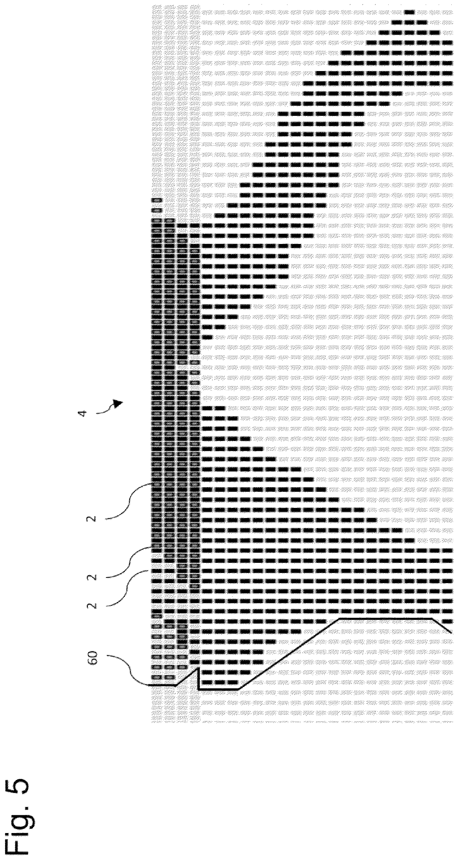

In Fig. 5 wird ein Beispiel für einen ausgeschlossenen Sonderfall durch ein Trennungskriterium 50 gezeigt. Bei einer besonders großen Person mit einem hohen Schritt sollen von dem erfindungsgemäßen Verfahren die beiden Beine natürlich nicht als zwei Personen erfasst werden. Dazu kann in dem Trennungskriterium 50 anschaulich das erzeugte Dreieck aus passiven Sensoren ausgeschlossen werden.

## Patentansprüche

1. Verfahren zur berührungslosen Erkennung von wenigstens einem Bewegungsablauf (4) mit einem Passiererkennungssystem (1), aufweisend wenigstens eine Sensoreinheit (10) zum Erfassen jeweils wenigstens eines Bewegungszustandes (2) innerhalb eines Erfassungsbereichs (12) der Sensoreinheit (10), eine Sendeeinheit (20) zur Übermittlung des wenigstens einen erfassten Bewegungszustandes (2), eine Rechnereinheit (30) mit einer Empfangseinheit (32) zum Empfang des wenigstens einen erfassten Bewegungszustandes (2), mit einer Auswerteinheit (34) zur Auswertung des wenigstens einen erfassten Bewegungszustandes (2) sowie mit einer Bereitstellungseinheit (36) zur Bereitstellung des wenigstens einen ausgewerteten Bewegungszustandes (2) und/oder des wenigstens einen erkannten Bewegungsablaufs (4), wobei die Sensoreinheit (10) eine Vielzahl von Sensoren, wenigstens zwei, besonders vorteilhaft vier Sensoren umfasst, welche in der Sensoreinheit übereinander und/oder diagonal zueinander angeordnet sind, wobei die Sensoreinheit (10) als Lichtschranke, Einweg-Lichtschranke, Reflexions-Lichtschranke und/oder Lichtgitter ausgestaltet ist, wobei das Verfahren nachfolgende Schritte umfasst:
- Erfassung von wenigstens einem ersten Bewegungszustand (2) und wenigstens einem zweiten Bewegungszustand (2) innerhalb des Erfassungsbereichs (12) durch die wenigstens eine Sensoreinheit (10), wobei ein erster Bewegungszustand (2) und ein zweiter Bewegungszustand (2) zu unterschiedlichen Zeitpunkten erfasst werden,
- Übermittlung der wenigstens zwei erfassten Bewegungszustände (2) durch die Sendeeinheit (20) an die Empfangseinheit (32) der Rechnereinheit (30),
- Empfang der wenigstens zwei erfassten Bewegungszustände (2) durch die Empfangseinheit (32) der Rechnereinheit (30),
- Erkennung wenigstens eines Bewegungsablaufs (4) auf Grundlage der wenigstens zwei empfangenen Bewegungszustände (2) durch die Auswerteinheit (34) der Rechnereinheit (30),
- Bereitstellung der wenigstens zwei ausgewerteten Bewegungszustände (2) und/oder der wenigstens zwei erkannten Bewegungszustände (4) durch eine Bereitstellungseinheit (36) der Rechnereinheit (30),wobei das Verfahren weiter umfasst:
- Ermittlung einer vorderen Profillinie (60) einer Person und/oder eines Objekts innerhalb des Erfassungsbereichs (12) auf Grundlage des wenigstens einen empfangenen Bewegungszustandes (2) durch die Rechnereinheit (30).

2. Verfahren nach Anspruch 1,
**dadurch gekennzeichnet,**
**dass** die Erkennung des wenigstens einen Bewegungsablaufs (4) durch die Rechnereinheit (30) eine Erkennung einer Richtung des wenigstens einen Bewegungsablaufs (4) umfasst.

3. Verfahren nach Anspruch 1 oder 2,
**dadurch gekennzeichnet,**
**dass** die Erkennung des wenigstens einen Bewegungsablaufs (4) durch die Rechnereinheit (30) eine Erkennung einer Anzahl des wenigstens einen erkannten Bewegungsablaufs (4), insbesondere eine Anzahl von zugehörigen Personen des wenigstens einen Bewegungsablaufs (4), umfasst.

4. Verfahren nach Anspruch 3,
**dadurch gekennzeichnet,**
**dass** die Erkennung der Anzahl des wenigstens einen Bewegungsablaufs (4) auf Grundlage eines Trennungskriteriums (50) erfolgt.

5. Verfahren nach Anspruch 4,
**dadurch gekennzeichnet,**
**dass** das Trennungskriterium (50) wenigstens einen erfassten passiven Bewegungszustand (2) zeitlich nach oder vor einem erfassten aktiven Bewegungszustand (2) aufweist.

6. Verfahren nach Anspruch 4 oder 5,
**dadurch gekennzeichnet,**
**dass** das Trennungskriterium (50) wenigstens einen erfassten passiven Bewegungszustand (2) örtlich oberhalb oder unterhalb von einem erfassten aktiven Bewegungszustand (2) aufweist.

7. Verfahren nach einem der vorangegangenen Ansprüche,
**dadurch gekennzeichnet,**
**dass** das Verfahren, insbesondere die Bereitstellung der wenigstens zwei ausgewerteten Bewegungszustände (2) und/oder des wenigstens einen Bewegungsablaufs (4) durch eine Bereitstellungseinheit (36) der Rechnereinheit (30), eine optische, akustische und/oder motorische Ausgabe durch eine Ausgabeeinheit (40) umfasst.

8. Verfahren nach einem der vorangegangenen Ansprüche,
**dadurch gekennzeichnet,**
**dass** die Erfassung der wenigstens zwei Bewegungszustände (2) innerhalb eines jeweils im Wesentlichen zweidimensionalen Erfassungsbereichs (12) durch die wenigstens eine Sensoreinheit (10) erfolgt.

9. Verfahren nach einem der vorangegangenen Ansprüche,
**dadurch gekennzeichnet,**
**dass** die Übermittlung, der Empfang und/oder die Auswertung der wenigstens zwei erfassten Bewegungszustände (2) nur bei Erfassung einer Veränderung von wenigstens einem ersten Bewegungszustand (2) im Vergleich zu wenigstens einem zweiten Bewegungszustand (2) ausgeführt werden.

10. Verfahren nach einem der vorangegangenen Ansprüche,
**dadurch gekennzeichnet,**
**dass** das Verfahren weiter umfasst:
- Umwandlung der Daten der wenigstens zwei erfassten Bewegungszustände (2) durch eine Umwandlungseinheit (38) der Rechnereinheit (30).

11. Verfahren nach Anspruch 10,
**dadurch gekennzeichnet,**
**dass** die Umwandlung der Daten eine Addition von aktiven Sensoren der wenigstens einen Sensoreinheit (10) umfasst.

12. Verfahren nach Anspruch 10 oder 11,
**dadurch gekennzeichnet,**
**dass** die Umwandlung der Daten des wenigstens einen erfassten Bewegungszustands (2) für die Grundlage zur Erkennung des wenigstens einen Bewegungsablaufs (4) löscht.

13. Passiererkennungssystem (1) zur Ausführung des Verfahrens nach einem der vorangegangenen Ansprüche, umfassend wenigstens eine erste Sensoreinheit (10) zum Erfassen jeweils wenigstens eines Bewegungszustandes (2) innerhalb eines Erfassungsbereichs (12) der wenigstens einen Sensoreinheit (10), eine Sendeeinheit (20) zur Übermittlung des wenigstens einen erfassten Bewegungszustandes (2), eine Rechnereinheit (30) mit einer Empfangseinheit (32) zum Empfang des wenigstens einen erfassten Bewegungszustandes (2), mit einer Auswerteinheit (34) zur Auswertung des wenigstens einen erfassten Bewegungszustandes (2) sowie mit einer Bereitstellungseinheit (36) zur Bereitstellung des wenigstens einen ausgewerteten Bewegungszustandes (2) und/oder des wenigstens einen erkannten Bewegungsablaufs (4), wobei die Sensoreinheit (10) eine Vielzahl von Sensoren, wenigstens zwei, besonders vorteilhaft vier Sensoren umfasst, welche in der Sensoreinheit übereinander und/oder diagonal zueinander angeordnet sind, wobei die Sensoreinheit (10) als Lichtschranke, Einweg-Lichtschranke, Reflexions-Lichtschranke und/oder Lichtgitter ausgestaltet ist, wobei die Rechnereinheit dazu ausgebildet ist, eine vordere Profillinie (60) einer Person und/oder eines Objekts innerhalb des Erfassungsbereichs (12) auf Grundlage des wenigstens einen empfangenen Bewegungszustandes (2) zu ermitteln.

14. Passiererkennungssystem (1) nach Anspruch 13,
**dadurch gekennzeichnet,**
**dass** wenigstens zwei Sensoreinheiten (10) zum Erfassen von jeweils wenigstens einem Bewegungszustand (2) innerhalb eines jeweiligen Erfassungsbereichs (12) der wenigstens zwei Sensoreinheiten (10) in dem Passiererkennungssystem (1) angeordnet sind.

15. Passiererkennungssystem (1) nach Anspruch 13 oder 14,
**dadurch gekennzeichnet,**
**dass** eine Ausgabeeinheit (40) des Passiererkennungssystems (1) zur optischen, akustischen und/oder motorischen Ausgabe auf Grundlage der Bereitstellung des wenigstens einen ausgewerteten Bewegungszustandes (2) und/oder des wenigstens einen Bewegungsablaufs (4) durch die Bereitstellungseinheit (36) ausgestaltet ist.

16. Passiererkennungssystem (1) nach einem der Ansprüche 13 bis 15,
**dadurch gekennzeichnet,**
**dass** eine Umwandlungseinheit (38) der Rechnereinheit (30) zur Umwandlung der Daten des wenigstens einen erfassten Bewegungszustandes (2) ausgestaltet ist.

## Claims

1. A method for the contactless detection of at least one movement sequence (4) with a passage detection system (1), having at least one sensor unit (10) for capturing at least one movement state (2) within a capture range (12) of the sensor unit (10), a transmitting unit (20) for transmitting the at least one captured movement state (2), a computer unit (30) with a receiving unit (32) for receiving the at least one captured movement state (2), with an evaluation unit (34) for evaluating the at least one captured movement state (2) and with a provision unit (36) for providing the at least one evaluated movement state (2) and/or the at least one captured movement sequence (4), wherein the sensor unit (10) comprises a plurality of sensors, at least two, particularly advantageously four sensors, which are arranged one above the other and/or diagonally to one another in the sensor unit, wherein the sensor unit (10) is configured as a light barrier, one-way light barrier, reflection light barrier and/or light grid, wherein the method comprises the following steps:
- capturing at least one first movement state (2) and at least one second movement state (2) within the capture range (12) by the at least one sensor unit (10), wherein a first movement state (2) and a second movement state (2) are captured at different times,
- transmitting the at least two captured movement states (2) by the transmitting unit (20) to the receiving unit (32) of the computer unit (30),
- receiving the at least two captured movement states (2) by the receiving unit (32) of the computer unit (30),
- detecting at least one movement sequence (4) on the basis of the at least two received movement states (2) by the evaluation unit (34) of the computer unit (30),
- providing the at least two evaluated movement states (2) and/or the at least two detected movement states (4) by a provision unit (36) of the computer unit (30), wherein the method further comprises:
- determining a front profile line (60) of a person and/or an object within the capture range (12) on the basis of the at least one received movement state (2) by the computer unit (30).

2. The method according to claim 1,
**characterised in**
**that** the detection of the at least one movement sequence (4) by the computer unit (30) comprises a detection of a direction of the at least one movement sequence (4).

3. The method according to claim 1 or 2,
**characterised in**
**that** the detection of the at least one movement sequence (4) by the computer unit (30) comprises a detection of a number of the at least one detected movement sequence (4), in particular a number of associated persons of the at least one movement sequence (4).

4. The method according to claim 3,
**characterised in**
**that** the detection of the number of at least one movement sequence (4) is carried out on the basis of a separation criterion (50).

5. The method according to claim 4,
**characterised in**
**that** the separation criterion (50) has at least one captured passive movement state (2) temporally after or before a captured active movement state (2).

6. The method according to claim 4 or 5,
**characterised in**
**that** the separation criterion (50) has at least one captured passive movement state (2) locally above or below a captured active movement state (2).

7. The method according to one of the preceding claims,
**characterised in**
**that** the method, in particular the provision of the at least two evaluated movement states (2) and/or the at least one movement sequence (4) by a provision unit (36) of the computer unit (30), comprises an optical, acoustic and/or motorised output by an output unit (40).

8. The method according to one of the preceding claims,
**characterised in**
**that** the capture of the at least two movement states (2) takes place within a respectively substantially two-dimensional capture range (12) by the at least one sensor unit (10).

9. The method according to one of the preceding claims,
**characterised in**
**that** the transmission, reception and/or evaluation of the at least two captured movement states (2) are only carried out upon capture of a change in at least one first movement state (2) in comparison to at least one second movement state (2).

10. The method according to one of the preceding claims,
**characterised in**
**that** the method further comprises:
- converting the data of the at least two captured movement states (2) by a conversion unit (38) of the computer unit (30).

11. The method according to claim 10,
**characterised in**
**that** the conversion of the data comprises an addition of active sensors of the at least one sensor unit (10).

12. The method according to claim 10 or 11,
**characterised in**
**that** the conversion of the data deletes the at least one captured movement state (2) for the basis for the detection of the at least one movement sequence (4).

13. A passage detection system (1) for carrying out the method according to one of the preceding claims, comprising at least one first sensor unit (10) for capturing at least one movement state (2) within a capture range (12) of the at least one sensor unit (10), a transmitting unit (20) for transmitting the at least one captured movement state (2), a computer unit (30) with a receiving unit (32) for receiving the at least one captured movement state (2), with an evaluation unit (34) for evaluating the at least one captured movement state (2) and with a provision unit (36) for providing the at least one evaluated movement state (2) and/or the at least one detected movement sequence (4), wherein the sensor unit (10) comprises a plurality of sensors, at least two, particularly advantageously four sensors, which are arranged one above the other and/or diagonally to one another in the sensor unit, wherein the sensor unit (10) is configured as a light barrier, one-way light barrier, reflection light barrier and/or light grid, wherein the computer unit is designed to determine a front profile line (60) of a person and/or an object within the capture range (12) on the basis of the at least one received movement state (2).

14. The passage detection system (1) according to claim 13,
**characterised in**
**that** at least two sensor units (10) for capturing at least one movement state (2) within a respective capture range (12) of the at least two sensor units (10) are arranged in the passage detection system (1).

15. The passage detection system (1) according to claim 13 or 14,
**characterised in**
**that** an output unit (40) of the passage detection system (1) is configured for optical, acoustic and/or motorised output on the basis of the provision of the at least one evaluated movement state (2) and/or the at least one movement sequence (4) by the provision unit (36).

16. The passage detection system (1) according to one of claims 13 to 15,
**characterised in**
**that** a conversion unit (38) of the computer unit (30) is configured for converting the data of the at least one captured movement state (2).

## Revendications

1. Procédé de détection sans contact d'au moins un déroulement de mouvements (4) comportant un système de détection de passage (1), présentant au moins une unité de capteur (10) pour acquérir respectivement au moins un état de mouvement (2) à l'intérieur d'une zone d'acquisition (12) de l'unité de capteur (10), une unité d'envoi (20) pour transmettre l'au moins un état de mouvement détecté (2), une unité de calcul (30) comportant une unité de réception (32) pour recevoir l'au moins un état de mouvement (2) acquis, comportant une unité d'évaluation (34) pour évaluer l'au moins un état de mouvement (2) acquis et comportant une unité de fourniture (36) pour fournir l'au moins un état de mouvement (2) évalué et/ou l'au moins un déroulement de mouvements (4) détecté, dans lequel l'unité de capteur (10) comprend une pluralité de capteurs, au moins deux, de manière particulièrement avantageuse quatre capteurs, lesquels sont agencés les uns au-dessus des autres et/ou en diagonale les uns par rapport aux autres dans l'unité de capteur, dans lequel l'unité de capteur (10) est conçue comme une cellule photoélectrique, une cellule photoélectrique unidirectionnelle, une cellule photoélectrique à réflexion et/ou une barrière lumineuse, dans lequel le procédé comprend les étapes suivantes :
- détection d'au moins un premier état de mouvement (2) et d'au moins un second état de mouvement (2) à l'intérieur de la zone d'acquisition (12) par l'au moins une unité de capteur (10), dans lequel un premier état de mouvement (2) et un second état de mouvement (2) sont acquis à des instants différents,
- transmission des au moins deux états de mouvement (2) acquis par l'unité d'envoi (20) à l'unité de réception (32) de l'unité de calcul (30),
- réception des au moins deux états de mouvement (2) acquis par l'unité de réception (32) de l'unité de calcul (30),
- détection d'au moins un déroulement de mouvements (4) sur la base des au moins deux états de mouvement (2) reçus par l'unité d'évaluation (34) de l'unité de calcul (30),
- fourniture des au moins deux états de mouvement (2) évalués et/ou des au moins deux états de mouvement (4) détectés par une unité de fourniture (36) de l'unité de calcul (30), dans lequel le procédé comprend en outre :
- détermination d'une ligne de profil avant (60) d'une personne et/ou d'un objet à l'intérieur de la zone d'acquisition (12) sur la base de l'au moins un état de mouvement (2) reçu par l'unité de calcul (30).

2. Procédé selon la revendication 1,
**caractérisé,**
**en ce que** la détection de l'au moins un déroulement de mouvements (4) par l'unité de calcul (30) comprend une détection d'une direction de l'au moins un déroulement de mouvements (4).

3. Procédé selon la revendication 1 ou 2,
**caractérisé,**
**en ce que** la détection de l'au moins un déroulement de mouvements (4) par l'unité de calcul (30) comprend une détection d'un nombre de l'au moins un déroulement de mouvements (4) détecté, en particulier d'un nombre de personnes associées à l'au moins un déroulement de mouvements (4).

4. Procédé selon la revendication 3,
**caractérisé,**
**en ce que** la détection du nombre de l'au moins un déroulement de mouvements (4) est effectuée sur la base d'un critère de séparation (50).

5. Procédé selon la revendication 4,
**caractérisé,**
**en ce que** le critère de séparation (50) présente au moins un état de mouvement passif (2) acquis après ou avant un état de mouvement actif (2) acquis.

6. Procédé selon la revendication 4 ou 5,
**caractérisé,**
**en ce que** le critère de séparation (50) présente au moins un état de mouvement passif (2) acquis localement au-dessus ou au-dessous d'un état de mouvement actif (2) acquis.

7. Procédé selon l'une des revendications précédentes,
**caractérisé,**
**en ce que** le procédé, en particulier la fourniture des au moins deux états de mouvement (2) évalués et/ou de l'au moins un déroulement de mouvements (4) par une unité de fourniture (36) de l'unité de calcul (30), comprend une sortie optique, acoustique et/ou motrice par une unité de sortie (40).

8. Procédé selon l'une des revendications précédentes,
**caractérisé,**
**en ce que** l'acquisition des au moins deux états de mouvement (2) est effectuée au sein d'une zone d'acquisition (12) respective sensiblement bidimensionnelle par l'au moins une unité de capteur (10).

9. Procédé selon l'une des revendications précédentes,
**caractérisé,**
**en ce que** la transmission, la réception et/ou l'évaluation des au moins deux états de mouvement (2) acquis ne peuvent être réalisées que lors de l'acquisition d'un changement d'au moins un premier état de mouvement (2) par rapport à au moins un second état de mouvement (2).

10. Procédé selon l'une des revendications précédentes,
**caractérisé,**
**en ce que** le procédé comprend en outre :
- conversion des données des au moins deux états de mouvement (2) acquis par une unité de conversion (38) de l'unité de calcul (30).

11. Procédé selon la revendication 10,
**caractérisé,**
**en ce que** la conversion des données comprend un ajout de capteurs actifs de l'au moins une unité de capteur (10).

12. Procédé selon la revendication 10 ou 11,
**caractérisé,**
**en ce que** la conversion des données efface au moins un état de mouvement (2) acquis pour la base de détection de l'au moins un déroulement de mouvement (4).

13. Système de détection de passage (1) pour la réalisation du procédé selon l'une des revendications précédentes, comprenant au moins une première unité de capteur (10) pour acquérir respectivement au moins un état de mouvement (2) au sein d'une plage d'acquisition (12) de l'au moins une unité de capteur (10), une unité d'envoi (20) pour transmettre l'au moins un état de mouvement détecté (2), une unité de calcul (30) comportant une unité de réception (32) pour recevoir l'au moins un état de mouvement (2) acquis, comportant une unité d'évaluation (34) pour évaluer l'au moins un état de mouvement (2) acquis et comportant une unité de fourniture (36) pour fournir l'au moins un état de mouvement (2) évalué et/ou l'au moins un déroulement de mouvements (4) détecté, dans lequel l'unité de capteur (10) comprend une pluralité de capteurs, au moins deux, de manière particulièrement avantageuse quatre capteurs, lesquels sont agencés les uns au-dessus des autres et/ou en diagonale les uns par rapport aux autres dans l'unité de capteur, dans lequel l'unité de capteur (10) est conçue comme une cellule photoélectrique, une cellule photoélectrique unidirectionnelle, une cellule photoélectrique à réflexion et/ou une barrière lumineuse, dans lequel l'unité de calcul est conçue pour déterminer une ligne de profil avant (60) d'une personne et/ou d'un objet à l'intérieur de la zone d'acquisition (12) sur la base de l'au moins un état de mouvement (2) reçu.

14. Système de détection de passage (1) selon la revendication 13,
**caractérisé,**
**en ce qu'**au moins deux unités de capteur (10) sont agencées pour l'acquisition respectivement d'au moins un état de mouvement (2) au sein d'une zone d'acquisition (12) respective des au moins deux unités de capteur (10) dans le système de détection de passage (1).

15. Système de détection de passage (1) selon la revendication 13 ou 14,
**caractérisé,**
**en ce qu'**une unité de sortie (40) du système de détection de passage (1) est conçue pour la sortie optique, acoustique et/ou motrice sur la base de la fourniture de l'au moins un état de mouvement (2) évalué et/ou de l'au moins un déroulement de mouvements (4) par l'unité de fourniture (36).

16. Système de détection de passage (1) selon l'une des revendications 13 à 15,
**caractérisé,**
**en ce qu'**une unité de conversion (38) de l'unité de calcul (30) est conçue pour convertir les données de l'au moins un état de mouvement (2) acquis.
